# EUROPÄISCHE PATENTSCHRIFT

(11) **EP 2 760 906 B1**
(45) Veröffentlichungstag und Bekanntmachung des Hinweises auf die Patenterteilung: **01.03.2017**
(21) Anmeldenummer: 12761613.4
(22) Anmeldetag: 19.09.2012
(51) Int. Cl.: C08G 18/80, C08G 69/20, C08G 18/02

(54) **VERFAHREN ZUR HERSTELLUNG VON POLYAMIDEN DURCH ANIONISCHE POLYMERISATION**
PROCESS FOR PRODUCING POLYAMIDES VIA ANIONIC POLYMERIZATION
PROCÉDÉ DE PRODUCTION DE POLYAMIDES PAR POLYMÉRISATION ANIONIQUE

(30) Priorität: 28.09.2011 EP 11183118
(43) Veröffentlichungstag der Anmeldung: 06.08.2014
(73) Patentinhaber: BASF SE, 67056 Ludwigshafen am Rhein (DE)
(72) Erfinder: DESBOIS, Philippe, 68535 Edingen-Neckarhausen (DE); BRUCHMANN, Bernd, 67251 Freinsheim (DE); SCHERZER, Dietrich, 67433 Neustadt (DE); WOLLNY, Andreas, 67251 Freinsheim (DE); RADTKE, Andreas, 68161 Mannheim (DE)
(74) Vertreter: BASF IP Association
(86) Internationale Anmeldenummer: PCT/EP2012/068388
(87) Internationale Veröffentlichungsnummer: WO 2013/045319

(56) Entgegenhaltungen:
- EP-A1- 0 023 626
- EP-A1- 0 134 616
- EP-A1- 0 156 129
- EP-A1- 0 158 393
- EP-A1- 0 159 070
- EP-A1- 0 755 966
- "Co-Katalysatoren", PACAST AG , Seite 1, XP002686162, Gefunden im Internet: URL:http://www.pacast.net/node/8 [gefunden am 2012-10-29]

## Beschreibung

Die vorliegende Erfindung betrifft ein Verfahren zur Herstellung von vernetzten Polyamiden durch anionische Polymerisierung von Lactamen in Gegenwart eines anionischen Katalysators und eines mit Caprolactam geschützten Polyisocyanats, wobei dieses Isocyanat im Mittel mindestens 8 geschützte Isocyanatgruppen enthält und nicht aus einem Polyol hergestellt wird.

Lactame, wie zum Beispiel Caprolactam, können anionisch polymerisiert werden. Hierbei wird in der Regel ein Katalysator sowie ein Initiator (auch Aktivator genannt) verwendet (aktivierte anionische Polymerisation).

Als Initiator bzw. Aktivator wurden bisher oftmals Diisocyanate bzw. deren Derivate verwendet. US 4,754000 (Bayer AG) beschreibt die aktivierte anionische Polymerisation von Laktamen zur Herstellung von Polyamiden, wobei Biuret-Gruppen enthaltende Polyisocyanate, die sich von nicht-aromatischen Diisocyanaten ableiten, als Aktivator zum Einsatz kommen.

In EP 1091991 (BASF AG) wird eine Zusammensetzung offenbart, die als Komponente A ein Polyisocyanurat mit einer mittleren NCO-Funktionalität von mehr als 3,5 enthält, sowie ein Verfahren zur Herstellung eines Oberflächenbeschichtungsmittels, bei dem die beschriebene Zusammensetzung zum Einsatz kommt.

US 3423372 nutzt ein ungeschütztes Polyisocyanat, was die Reaktivität deutlich reduziert, mit sehr geringer Aktivator-Konzentration in den Beispielen (1/200-1/50 Molar). Bei den genutzten Konzentrationen des US-Patents dauert die Polymerisation mehr als 3 Minuten.

EP 0156129 nutzt einen Kautschuk (also ein Elastomer) als Precursor des multifunktionellen Aktivators, deshalb ist das resultierende PA mit max. 1,12 GPa nicht steif. Dieser Aktivator hat ein hohes Mw, dazu ist eine große Menge an Aktivator erforderlich (mind. 20%). Es wird eine Mischung aus einem bifunktionnellen und einem polyfunktionnellen Aktivator genutzt; als Konsequenz ist das resultierende Polyamid nicht vernetzt.

EP 0 158 393 A1 offenbart ein Verfahren zur Herstellung von vernetzten Polyamiden durch anionische Polymerisation mindestens eines Lactams in Gegenwart eines anionischen Katalysators und eines Aktivators, wobei der Aktivator ein mit Caprolactam geschütztes Polyisocyanat aus einem Diisocyanat und einem Polyol R-(OH)ₙ ist, wobei n = 10 ist.

Die Begriffe "Gusspolymerisation" und "Gusspolyamid" beziehen sich im Rahmen der vorliegenden Erfindung auf die Polymerisation in einer Form, insbesondere die Polymerisation in einer Form ohne Anwendung von erhöhtem Druck (wie z. B. beim Spritzguss üblich), bzw. das hieraus resultierende Polyamid.

Mit den bisher beschriebenen Systemen konnten allerdings nur sehr begrenzt Polyamide mit einem hohen Molekulargewicht hergestellt werden. Die einzige Möglichkeit war, die Konzentration des Aktivators zu reduzieren, was jedoch gleichzeitig die Reaktivität des Systems drastisch reduziert. Außerdem sind die konventionell hergestellten Polyamide nicht vernetzt und stellen somit Thermoplaste dar; eine hohe Vernetzung, mit den damit einhergehenden vorteilhaften Eigenschaften eines Duroplasten (wie besseres Kriechen, höhere Chemikalienbeständigkeit), konnte nicht erreicht werden.

Es stellte sich somit die Aufgabe, ein Verfahren zur Herstellung von Polyamid, insbesondere von Guss-Polyamid, bereit zu stellen, das den Zugang zu hochmolekularen und stärker vernetzten Polyamiden eröffnet.

Die genannte Aufgabe konnte nun überraschenderweise durch Verwendung eines neuartigen Initiators (bzw. Aktivators), wie insbesondere in den Ansprüchen definiert, gelöst werden.

Der Gegenstand der vorliegenden Erfindung ist somit ein Verfahren zur Herstellung von vernetztem Polyamid, durch anionische Polymerisation mindestens eines Lactams in Gegenwart eines anionischen Katalysators und eines Aktivators, wobei der Aktivator ein mit Caprolactam geschütztes Polyisocyanat ist und im Mittel mindestens 8 geschützte Isocyanatgruppen enthält, bevorzugt mindestens 10, und wobei der Aktivator nicht aus einem Polyol hergestellt wird, und wobei das Molverhältnis von Lactam zum Aktivator bevorzugt 1:1 bis 10.000:1 beträgt, besonders bevorzugt 10:1 bis 1.000:1 und ganz besonders bevorzugt 20:1 bis 500, und wobei die Temperatur während der Umsetzung bevorzugt 70 bis 300°C beträgt, besonders bevorzugt 100 bis 170°C, ganz besonders bevorzugt 120 bis 170°C.

Der Begriff "vernetztes Polyamid" im Sinne der vorliegenden Erfindung bedeutet, dass pro Polymerkette mindestens ein Vernetzungspunkt vorliegt.

Der Begriff "geschützte Isocyanatgruppe" im Sinne der vorliegenden Erfindung bezieht sich auf eine Isocyanatgruppe, die mit einer anderen funktionalen Gruppe, wie z. B. einer Caprolactam-Gruppe, blockiert ist. Diese Gruppe wirkt dann als "Schutzgruppe" und blockiert die IsocyanatGruppe während der Reaktion.

Weitere Gegenstände der vorliegenden Erfindung sind ein vernetztes Polyamid, herstellbar nach dem erfindungsgemäßen Verfahren, sowie die Verwendung eines nach dem erfindungsgemäßen Verfahren herstellbaren vernetzten Polyamids, als Strukturelement, Verpackungsfilm, Pulver für die Lasersinterung, Beschichtung und/ oder beim Rotomolding.

In einer bevorzugten Ausführungsform der Erfindung enthält der Initiator im Mittel mindestens zehn geschützte Isocyanatgruppen.

Die Zahl der geschützten Isocyanatgruppen im Initiator (Aktivator) berechnet sich dabei als Durchschnitt des gesamten eingesetzten Initiators, der ein Gemisch verschiedener Verbindungen sein kann.

Da bei der Herstellung des Initiators, beispielsweise durch Oligomerisierung von Diisocyanaten, in der Regel keine reinen Produkte, sondern Verbindungen mit unterschiedlichen Oligomerisierungsgraden entstehen, lässt sich die Funktionalität der entstandenen Verbindungen lediglich als Durchschnittswert angeben.

Der Anteil geschützter Isocyanatgruppen kann durch Titration bestimmt werden. Hierbei wird beispielsweise die geschützte Isocyanatgruppen enthaltende Verbindung bzw. Mischung mit Aminverbindungen, wie z. B. Dibutylamin, umgesetzt, wodurch Harnstoffderivate entstehen. Dann wird das überschüssige Amin mit HCI rücktitriert.

Der Initiator kann analog zu dem in EP 1 091 991 B1 beschriebenen Verfahren hergestellt werden (siehe insbesondere Abschnitte [0026] bis [0030]).

In einer Ausführungsform der Erfindung ist der Initiator ein Isocyanurat; in einer weiteren Ausführungsform der Erfindung ist der Initiator herstellbar aus einem Polyamin. Erfindungsgemäß enthält der Aktivator jedoch kein Polyol.

Als Initiator für die aktivierte anionische Polymerisation eines Lactams sind alternativ auch Säurehalogenide mit im Mittel mehr als 3,5 geschützten Säurehalogenidgruppen geeignet.

Als Lactam eignen sich unter anderem Caprolactam, Piperidon, Pyrrolydon, Lauryllactam oder deren Mischungen.

In einer bevorzugten Ausführungsform der Erfindung wird eine Verbindung aus der Gruppe umfassend Caprolactam, Lauryllactam oder deren Mischungen eingesetzt; besonders bevorzugt sind hierbei Caprolactam oder Lauryllactam.

Auch cyclische Lactone können copolymerisiert werden.

Als Katalysator eignen sich unter anderem Natriumcaprolactamat, Kaliumcaprolactamat, Bromidmagnesiumcaprolactamat, Chloridmagnesiumcaprolactamat, Magnesiumbiscaprolactamat, Natriumhydride, Natrium-Metall, Natriumhydroxid, Natriummethoxid, Natriumethoxid, Natriumpropoxid, Natriumbutoxid, Kaliumhydrid, Kalium-Metall, Kaliumhydroxid, Kaliummethoxid, Kaliumethoxid, Kaliumpropoxid, Kaliumbutoxid.

Bevorzugt wird der Katalysator für das erfindungsgemäße Verfahren ausgewählt aus der Gruppe umfassend Natriumhydride, Natrium-Metall, Natriumcaprolactamat; besonders bevorzugt ist dabei Natriumcaprolactamat (z. B. Bruggolen® C 10, eine Lösung aus 18 Gew.-% Natriumcaprolactamat in Caprolactam).

Das Polymer kann selbstverständlich auch mit einem oder mehreren der üblichen Additive gemischt werden, wie zum Beispiel Fließverbesserer, Stabilisatoren, Entformungsmittel, Flammschutzmittel, Füllstoffe (z. B. organische und/ oder anorganische Füllstoffe), Gleitmittel, in den Monomeren lösliche oder dispergierte Polymere, Präpolymere.

Das Molverhältnis von Lactam zum Katalysator kann in weiten Grenzen variiert werden, beträgt in der Regel 1:1 bis 10.000:1, bevorzugt 10:1 bis 1.000:1, besonders bevorzugt 20:1 bis 300:1.

Das Molverhältnis von Aktivator zum Katalysator kann in weiten Grenzen variiert werden, beträgt in der Regel 10:1 bis 1:100, bevorzugt 5:1 bis 1:10, besonders bevorzugt 2:1 bis 1:5.

Das Molverhältnis von Lactam zum Aktivator kann in weiten Grenzen variiert werden, beträgt in der Regel 1:1 bis 10.000:1, bevorzugt 10:1 bis 1.000:1, besonders bevorzugt 20:1 bis 500:1.

Die Temperatur während der Umsetzung kann in weiten Grenzen variiert werden; sie beträgt in der Regel 70 bis 300°C, bevorzugt 100 bis 170°C, besonders bevorzugt 120 bis 170°C.

In einer bevorzugten Ausführungsform des erfindungsgemäßen Verfahrens wird genau ein Lactam eingesetzt.

In einer weiteren bevorzugten Ausführungsform des erfindungsgemäßen Verfahrens wird genau ein Katalysator eingesetzt.

In einer weiteren bevorzugten Ausführungsform des erfindungsgemäßen Verfahrens wird genau ein Initiator eingesetzt.

In einer besonders bevorzugten Ausführungsform des erfindungsgemäßen Verfahrens wird genau ein Lactam, genau ein Katalysator und genau ein Initiator eingesetzt.

Das erfindungsgemäße Verfahren kann unter anderem als Gusspolymerisation, Sprühpolymerisation, reaktive Extrusion, Dispersionspolymerisation oder Rotomolding geführt werden.

Bei Durchführung des erfindungsgemäßen Verfahrens mit dem erfindungsgemäßen Aktivator wird das Molekulargewicht (M_{w}) der Polyamid-Produkte erhöht. Gleichzeitig kommt es zu einer stärkeren Vernetzung, die sich in einer höheren Viskosität der Produkte manifestiert.

Die erfindungsgemäß herstellbaren Polyamide können unter anderem eingesetzt werden als strukturelle Materialien im Automobilbau in Interior, Exterior, Body oder Chassis wie z.B. Fahrgastzelle, Unterboden, Trägerstrukturen, Kotflügel, Inliner für Tanks, Zahnräder, Gehäuse, und als Verpackungsfilme, Pulver für die Lasersinterung, Beschichtung, sowie beim Rotomolding.

### Beispiele

Im folgenden Abschnitt werden einige Beispiele zur Veranschaulichung der Erfindung angegeben. Die Beispiele sind dabei nur illustrierend zu verstehen und sollen keinesfalls den Umfang der vorliegenden Erfindung einschränken.

### Herstellung der Polyisocyanate:

Hexamethylendiisocyanat (HDI) wurde unter Stickstoffbedeckung vorgelegt und das Produkt auf 80°C erhitzt. Man gab 400 Gew.-ppm (bezogen auf Diisocyanat) des Katalysators N,N,N-Trimethyl-N-(2-hydroxypropyl)ammonium-2-ethylhexanoat zu, ließ bei 80 °C reagieren und stoppte die Reaktion bei dem gewünschten NCO-Gehalt des Rohprodukts durch Zugabe von 400 Gew.-ppm (bezogen auf Diisocyanat) Di-2-(Ethylhexyl)phosphat. Das Reaktionsgemisch wurde anschließend zur Entfernung von monomerem HDI im Dünnschichtverdampfer bei erhöhter Temperatur und vermindertem Druck (2.5 mbar) destilliert. Der HDI-Restmonomergehalt lag anschließend unter 0.3 Gew.%.
Initiator A1: 80 Gew. % geschützte aliphatische Polyisocyanate, gemischt mit Caprolactam bei 80°C während 30 Min., so dass 44,97 Gew. % geschützte Polyisocyanate in 55,03 Gew. % Caprolactam erhalten werden.
Initiator A2: enthält 22,49 Gew. % geschützte aliphatische Polyisocyanate in 77,51 Gew. % Caprolactam

### Vergleichsbeispiele 1 und 2 und Vergleichsbeispiel A:

### Synthese von Polyamid-6 durch anionische Polymerisation von ε-Caprolactam

Alle Polymerisationsreaktionen wurden bei 140°C unter Rühren in trockener Argonatmosphäre in einem 50-ml-Glaskalorimeterreaktor, der mit einem fettfreien Teflontopf verschlossen und mit einem Thermoelement versehen war, durchgeführt.

Die Viskositätszahl (VZ) wurde bestimmt gemäß ISO 307 (bei C = 5 gl/ in 96 %iger Schwefelsäure).

Der Rest an Caprolactam wurde chromatographisch bestimmt. Die DSC-Messungen wurden durchgeführt am Kalorimeter Q-2000 der FA. Waters-GmbH. Die Einwaage betrug ca. 8,5 mg - die Heiz- und Kühlrate 20K/ min. Gemessen wurden die Proben in Anlehnung an die ISO 11357 - 2, 3, u. 7. Als Referenz wurde eine Schmelzenthalpie von 220 J/g für ein 100% kristallines Polyamid angenommen.

### Vergleichsbeispiel A

8,34 g (73,8 mmol) ε-Caprolactam und 0,51 g (1,04 mmol) Initiator Brüggolen® C20 (80% w/w blockiertes Diisocyanat in ε-Caprolactam) wurden in den Reaktor bei 140°C gemischt und einige Minuten bei 140°C temperiert. Nach Erreichen der 140°C wurde 1,15 g (1,44 mmol) Katalysator Brüggolen® C 10 (17% w/w ε-Caprolactamat in ε-Caprolactam) als Feststoff bei Raumtemperatur (RT) in die schmelzflüssige Mischung zugegeben und die Polymerisation 10 Minuten fortschreiten lassen; anschließend wurde durch Abkühlen des Reaktors in Wasser (10°C) gequencht. Man erhielt 9,92 g Polyamid 6 als Feststoff.

Eine max. Temperatur von 180,6°C wurde nach 52 Sek. gemessen.

Das Polymer enthält 1,5% Rest Caprolactam und hat eine Lösungsviskosität von 185.

Eine Kristallinität von 30% wurde gemessen.

### Vergleichsbeispiel 1

7,83 g (69,3 mmol) ε-Caprolactam und 1,02 g Initiator A (44,97 % w/w in ε-Caprolactam) wurden in den Reaktor bei 140°C gemischt und ein paar Minuten bei 140°C temperiert. Nach Erreichen der 140°C wurde 1,15 g (1,44 mmol) Katalysator Brüggolen® C 10 (17% w/w ε-Caprolactamat in ε-Caprolactam) als Feststoff bei RT in die schmelzflüssige Mischung zugegeben und die Polymerisation 10 Minuten fortschreiten lassen; anschließend wurde durch Abkühlen des Reaktors in Wasser (10°C) gequencht. Man erhielt 9,79 g Polyamid 6 als Feststoff.

Eine max. Temperatur von 178,7°C wurde nach 55 Sek. Gemessen

Das Polymer enthält 1,8% Rest Caprolactam. Die VZ des Polymers kann nicht gemessen werden, da es in Schwefelsäurelösung unlöslich ist.

Eine Kristallinität von 23% wurde gemessen.

### Vergleichsbeispiel 2

9,2 g (81,4 mmol) ε-Caprolactam und 0,80 g Initiator A (22,49 % w/w in ε-Caprolactam) wurden in den Reaktor bei 140°C gemischt und ein paar Minuten bei 140°C temperiert. Nach Erreichen der 140°C wurde 0,4 g (0,35 mmol) Katalysator Brüggolen® C 10 (17% w/w ε-Caprolactamat in ε-Caprolactam) als Feststoff bei RT in die schmelzflüssige Mischung zugegeben und die Polymerisation 10 Minuten fortschreiten lassen; anschließend wurde durch Abkühlen des Reaktors in Wasser (10°C) gequencht. Man erhielt 9,86 g Polyamid 6 als Feststoff.

Eine max. Temperatur von 182,8 °C wurde nach 66 Sek. Gemessen

Das Polymer enthält 2,3% Rest Caprolactam. Die VZ des Polymers kann nicht gemessen werden, da es in Schwefelsäurelösung unlöslich ist.

Eine Kristallinität von 18% wurde gemessen.

Der erfindungsgemäße Initiator bzw. das erfindungsgemäße Verfahren liefert Polyamide mit einem erhöhten Molekulargewicht (und dadurch erhöhter Viskosität) sowie einer stärkeren Vernetzung (und dadurch geringer Kristallinität) als konventionelle Verfahren.

## Patentansprüche

1. Verfahren zur Herstellung von vernetztem Polyamid durch anionische Polymerisation mindestens eines Lactams in Gegenwart eines anionischen Katalysators und eines Aktivators, wobei der Aktivator ein mit Caprolactam geschütztes Polyisocyanat ist und im Mittel mindestens 8 geschützte Isocyanatgruppen enthält, und wobei der Aktivator nicht aus einem Polyol hergestellt wird.

2. Verfahren gemäß Anspruch 1, wobei mindestens ein Lactam ausgewählt ist aus der Gruppe enthaltend Caprolactam, Lauryllactam und deren Mischungen.

3. Verfahren gemäß einem der Ansprüche 1 bis 2, wobei alle verwendeten Lactame ausgewählt sind aus der Gruppe enthaltend Caprolactam, Lauryllactam und deren Mischungen.

4. Verfahren gemäß einem der Ansprüche 1 bis 3, wobei genau ein Lactam verwendet wird.

5. Verfahren gemäß einem der Ansprüche 1 bis 4, wobei der anionische Katalysator ausgewählt ist aus der Gruppe enthaltend Natriumhydride, Natrium-Metall, Natriumcaprolactamat und deren Mischungen.

6. Verfahren gemäß einem der Ansprüche 1 bis 5, wobei das Molverhältnis von Lactam zum Aktivator 1:1 bis 10.000:1 beträgt.

7. Verfahren gemäß einem der Ansprüche 1 bis 6, wobei die Temperatur während der Polymerisation im Bereich von 70 °C bis 300 °C liegt.

8. Polyamid, herstellbar nach dem Verfahren eines der Ansprüche 1 bis 7.

9. Verwendung eines nach dem Verfahren eines der Ansprüche 1 bis 7 herstellbaren Polyamids als Strukturelement, Verpackungsfilm, Pulver für die Lasersinterung, Beschichtung und/ oder beim Rotomolding.

## Claims

1. A process for producing crosslinked polyamide via anionic polymerization of at least one lactam in the presence of an anionic catalyst and of an activator, where the activator is a caprolactam-capped polyisocyanate and comprises on average at least 8 capped isocyanate groups, and where the activator is not produced from a polyol.

2. The process according to claim 1, where at least one lactam has been selected from the group comprising caprolactam, lauryllactam, and mixtures of these.

3. The process according to either of claims 1 and 2, where all of the lactams used have been selected from the group comprising caprolactam, lauryllactam, and mixtures of these.

4. The process according to any of claims 1 to 3, where precisely one lactam is used.

5. The process according to any of claims 1 to 4, where the anionic catalyst has been selected from the group comprising sodium hydrides, sodium metal, sodium caprolactamate, and mixtures of these.

6. The process according to any of claims 1 to 5, where the molar ratio of lactam to the activator is from 1:1 to 10 000:1.

7. The process according to any of claims 1 to 6, where the temperature during the polymerization is in the range from 70°C to 300°C.

8. A polyamide which can be produced by the process of any of claims 1 to 7.

9. The use of a polyamide that can be produced by the process of any of claims 1 to 7, as coating, structural element, packaging film, or laser-sintering powder, and/or during roto-molding.

## Revendications

1. Procédé de fabrication de polyamide réticulé par polymérisation anionique d'au moins un lactame en présence d'un catalyseur anionique et d'un activateur, l'activateur étant un polyisocyanate protégé avec du caprolactame et contenant en moyenne au moins 8 groupes isocyanate protégés, et l'activateur n'étant pas fabriqué à partir d'un polyol.

2. Procédé selon la revendication 1, dans lequel au moins un lactame est choisi dans le groupe contenant le caprolactame, le lauryllactame et leurs mélanges.

3. Procédé selon l'une quelconque des revendications 1 à 2, dans lequel tous les lactames utilisés sont choisis dans le groupe contenant le caprolactame, le lauryllactame et leurs mélanges.

4. Procédé selon l'une quelconque des revendications 1 à 3, dans lequel exactement un lactame est utilisé.

5. Procédé selon l'une quelconque des revendications 1 à 4, dans lequel le catalyseur anionique est choisi dans le groupe contenant les hydrures de sodium, le métal sodium, le caprolactamate de sodium et leurs mélanges.

6. Procédé selon l'une quelconque des revendications 1 à 5, dans lequel le rapport molaire entre le lactame et l'activateur est de 1:1 à 10 000:1.

7. Procédé selon l'une quelconque des revendications 1 à 6, dans lequel la température pendant la polymérisation se situe dans la plage allant de 70 °C à 300 °C.

8. Polyamide, pouvant être fabriqué par le procédé selon l'une quelconque des revendications 1 à 7.

9. Utilisation d'un polyamide pouvant être fabriqué par le procédé selon l'une quelconque des revendications 1 à 7 en tant qu'élément structural, film d'emballage, poudre pour le frittage laser, revêtement et/ou pour le rotomoulage.
